# EUROPEAN PATENT SPECIFICATION

(11) **EP 3 328 615 B1**
(45) Date of publication and mention of the grant of the patent: **05.04.2023**
(21) Application number: 16758311.1
(22) Date of filing: 01.08.2016
(51) Int. Cl.: B29C 55/06, B29D 7/00

(54) **PROCESS FOR THE PRODUCTION OF A PURE LAYERED STRETCH FILM USING SINGLE PASS EXTRUSION RESINS**
VERFAHREN ZUR HERSTELLUNG EINER REINEN GESTRECKTEN FOLIE UNTER VERWENDUNG VON EINZELDURCHLAUFEXTRUSIONSHARZEN
PROCÉDÉ POUR LA FABRICATION D'UN FILM ÉTIRABLE EN COUCHES PURE PRODUIT À L'AIDE DE RÉSINES D'EXTRUSION À USAGE UNIQUE

(30) Priority: 30.07.2015 US 201562199152 P
(43) Date of publication of application: 06.06.2018
(73) Proprietor: Paragon Films Inc., Broken Arrow, OK 74012-1164 (US)
(72) Inventor: BAAB, Michael, John, Tulsa, OK 74133 (US)
(74) Representative: Isfort, Olaf
(86) International application number: PCT/US2016/044998
(87) International publication number: WO 2017/020037

(56) References cited:
- WO-A1-2007/057923
- WO-A1-2010/023606
- WO-A1-2015/077711
- US-A- 4 129 632
- US-A1- 2015 037 557

## Description

The present invention relates generally to high-quality, durable, flexible stretch films, and reducing gel formations when producing a cast stretch film from virgin resins introduced into a single pass extrusion process without prior, subsequent or contemporaneous introduction of reprocessed film material such as edge trim or center trims and/or repellitized material. The resulting film provides a finished product containing a plurality of polymer layers having only a single heat history.

In the cast stretch film process, when a molten web exits a die, the edges of the web draw in towards the center of the die due to inherent melt tension of the polymers and the relaxation of the web in the molten state. This phenomenon is commonly referred to as "neck-in."

Stretch film producers are typically required to remove this effected region of the web (usually a minimum of 102-127 mm (4-5 inches)) in order to make the film as uniform as possible in thickness across the web. In general, the more uniform the web, the better the roll geometry and conformity. Poor roll geometry affects the ability of the roll to unwind uniformly and stretch to a prescribed level, and increases the chance of film failure when it is stretched or applied to a load.

In cast stretch film production operations, the neck-in material, along with any center trims (film removed between the adjoining rolls), is sent to either a grinder or a repellitizer. This material typically accounts for as much as 20% of the total output of production lines. Currently, all known commercial cast stretch film producers reintroduce this material back into the process in order to reduce costs and make production of the film commercially viable. In WO 2015 / 077711 A1 a method for producing a cast stretch film is disclosed, wherein WO 2015 / 077711 A1 proposes longitudinally slitting the film into multiple sections and winding the film onto a film roll. US 4 129 632 A also discloses a method for producing a cast stretch film, whereby the bead end cuttings are collected and can be repellitized and reused.

The vast majority of film producers convert the trimmed material to "fluff" (by chopping the film ribbon into small pieces), and then re-inserting the fluff back into a larger extruder, where it is combined in a special compacting hopper with resin pellets before entering the feed throat of the extruder.

The fluff can also be sent to an auxiliary compounding extruder to be converted into what is generally referred to as reprocessed pellets or "repro." Some facilities have the ability to send the edge trim directly to a repelletizing extruder and then return the repro back to the line for re-introduction to the process.

In each of the aforementioned operations, the resulting reprocessed material is of a lesser quality than the virgin resins because the repro is a blend of all of the resins in the film. When the reprocessed resins are blended with the virgin resins of a discrete layer of the film, the desired film properties are negatively impacted. The blending of reprocessed resin into virgin products may be acceptable for lower grade films, but it has the potential to significantly degrade the performance characteristics of higher grade films.

One of the negative effects associated with the blending of reprocessed material is that the reprocessed material introduces multiple heat and shear histories. Due to the high temperatures required in the cast stretch film process (often greater than 500°F / 260°C or more), multiple pass extrusion results in a significant degradation of the polymers due to oxidation, crosslinking, and chain scission.

Other defects associated with these degraded products are gelling, die lip build-up, clogged flow lines, and incidental production of carbon. For example, when film is produced on a typical commercial stretch film production line under steady state extrusion conditions, a trim return of around 18% per iteration yields multiple heat/shear histories in the following percentages:
First pass - 18%
Second pass - 3.24%
Third pass - 0.58%
Fourth pass - 0.10%
Fifth pass - 0.02%

Due to the potential for contamination while handling of the trimmed film, the reprocessed material is less flexible, less durable, and of a lower grade than films produced using only virgin resins.

There is, therefore, a long-standing yet unmet need for high-grade stretch films having improved flexibility and durability, and improved methods of manufacturing the same.

Therefore a method for reducing gel formations when producing a cast stretch film is provided according to claim 1 or according to claim 2.

In other embodiments, the method includes delivering the molten virgin resin to a die via one or more transfer pipes.

In further embodiments, the method includes one or more of: moving the resin from the die onto a casting roll; moving the resin from the die onto a matte casting roll; moving the resin from the die onto an approximately 762-mm (30-inch) matte casting roll; moving the resin from the die onto a casting roll having a set temperature; moving the resin from the die onto a casting roll having a set temperature between about 23,9° C (75° F) and about 37,8° C (100° F); and moving the resin from the die onto a casting roll having a set temperature of about 32,2° C (90° F).

In still further embodiments, the method includes one or more of: moving the resulting film from the casting roll onto a secondary chill roll; moving the film from the casting roll onto an approximately 508-mm (20-inch) chill roll; moving the film from the casting roll to a secondary chill roll having a set temperature; moving the film from the casting roll to a secondary chill roll having a set temperature between about 18,3° C

(65° F) and about 32,2° C (90° F); and moving the film from the casting roll to a secondary chill roll having a set temperature of about 29,4° C (85° F).

Possibly the method includes one or more of: moving the film from the casting roll onto a slitting assembly; using the slitting assembly to form one or more interior slits, thereby creating waste film that is not recycled back into the production process; and using the slitting assembly to form one or more exterior slits, thereby creating waste film that is not recycled back into the production process.

Possibly the method includes one or more of: moving the film from the secondary chill roll onto a slitting assembly; using said slitting assembly to form one or more interior slits, thereby creating waste film that is not recycled back into the production process; and using said slitting assembly to form one or more exterior slits, thereby creating waste film that is not recycled back into the production process.

In still other embodiments, the method includes one or more of: omitting the introduction of any waste material into the virgin resin prior to the melting and extruding processes; and omitting the introduction of any waste material into the virgin resin during the melting and extruding processes.

For a further understanding of the nature, objects, and advantages of the present invention, reference should be made to the followed description, read in conjunction with the following drawings, wherein like reference numerals denote like elements and wherein:
FIG. 1 illustrates the steps for producing cast stretch films in-process according to one embodiment of the present invention; and
FIG. 2 illustrates a means for producing cast stretch films according to one embodiment of the present invention.

The following detailed description is not limiting, but offered merely for the purpose of illustrating several example embodiments.

The ability to produce films utilizing only single pass extrusion provides significant improvement in performance properties by removing the blended resins that are reintroduced into single pass virgin resin layers, while also reducing many of the defects associated with reprocessed material due to crosslinking, oxidation, and contamination.

Note that for purposes of this application, the term "virgin resin" comprises a resin that is not blended, processed prior to extrusion in conjunction with, or otherwise contaminated by reprocessed waste resins.

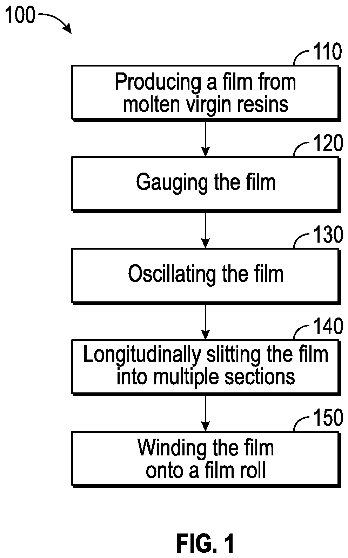

Referring generally to FIG. 1, the steps 100 for producing a cast stretch film according to one aspect of the invention are illustrated. Specifically, the steps comprise producing a film from molten virgin resins 110, gauging the film 120, oscillating the film 130, longitudinally slitting the film into multiple sections 140, and winding the film onto a film roll 150. In some embodiments, all of the steps are performed along a single production line. However, it is also contemplated that the steps can be performed in a different order, and steps may be added or eliminated without departing from the scope of the claims below. In any event, waste and trim film is not reprocessed back into first step 110.

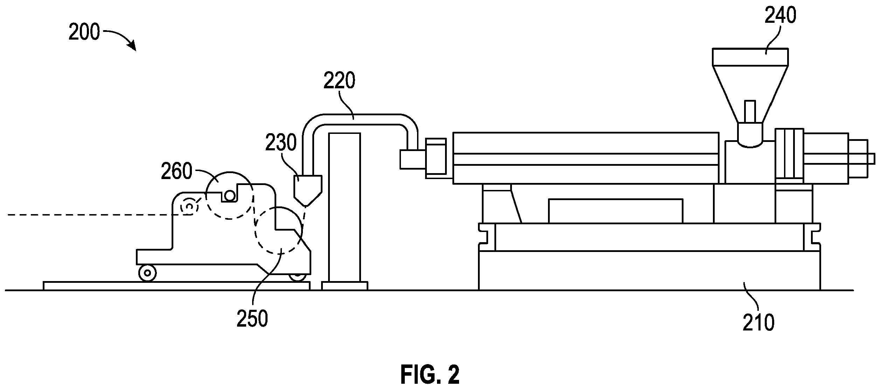

As shown in FIG. 2, a means for producing a cast stretch film from molten virgin resins 200 comprises one or more extruders 210 connected by transfer pipes 220 to a die 230. The number of extruders 210 used in the apparatus depends upon the desired composition of the film.

For example, to produce a three-layer film, three extruders 210 are used. In another example embodiment, to produce a five-layer film, three, four, or even five extruders 210 are used.

Possibly the extruders 210 are connected to a source 240 of stock virgin resin. The extruders 210 heat the stock virgin resin to a molten state and deliver the molten virgin resin to the die 230 through the transfer pipes 220. In example embodiments, the film is extruded through the die 230 onto a casting roll 250. In further example embodiments, the casting roll 250 is a 762-mm (30-inch) diameter matte casting roll having a set temperature. In still further example embodiments, the set temperature of the casting roll ranges from about 23,9° C (75° F) to 37,8° C (100° F); in a presently preferred embodiment the casting roll has a set temperature of about 32,2° C (85 °F).

Possibly the film moves from the casting roll 250 to a secondary chill roll 260. According to example embodiments, the secondary chill roll is a 508-mm (20-inch) diameter mirror finish secondary chill roll with a set temperature. As a further example embodiment, the set temperature of the secondary chill roll ranges from about 18,3° C (65° F)to 32,2° C (90° F), with a preferred value of about 29,4° C (85° F).

Possibly the film is then passed from the caster roll or the chiller roll to a slitting assembly. Since slitting assemblies are generally known in the art, the present disclosure comprises any previously known slitting assembly (or any other similarly functioning slitting assembly subsequently devised) used to slit the film into multiple sections, for example, into one or more interior slit sections and one or more exterior slit sections.

An interior slit is defined as a slit made somewhere within the original width of film, thereby resulting in multiple sections of lesser width. For example, if a sheet of film is divided using a single internal slit, two smaller sheets of approximately one-half the width of the original sheet width will be created. In so dividing the sheet, film waste may be created that can be captured and gathered together with additional film waste in order to create a supply of reprocessed resin that can later be molten into the resin supply subsequently extruded by the die.

An exterior slit is defined as a slit made along one of the edges of the original width of film. So, even if a sheet is not divided by a slitter, at least two exterior slits are still possible, *viz.,* one on either side of the film sheet. If a sheet is divided one or more times, additional exterior slits may result as each new subsection of the sheet again comprises two external edges. In any event, any film trimmed during the exterior slitting process is typically gathered and added to other such waste for reprocessing into the production line during the melting of the resin feed stage.

In stark contrast to the prior art, however, at no point in the process claimed herein is the molten virgin resin blended, processed in conjunction with, or otherwise contaminated by any reprocessed waste or trim resins obtained from either the casting process or from an external source. In other words, neither the waste captured and gathered during a given process run nor waste previously obtained or combined with similar waste from other, external sources, is ever used in the melting and extruding stage or at any other time during production. By avoiding this step, stretch film is obtained having important improvements over films made using the reprocessing methods of the prior art.

For example, through detailed experimentation it has been shown that defects in a film resulting from gel formation attributable to reprocessed waste film can be approximately halved by using only virgin resin materials in the process run. Since the mentioned gel formations are deleterious to the stability of the film and cause film failure under stress loads, such defects are to be avoided or minimized where possible.

In one experiment in which a stretch film run of approximately 2134 m (7000 feet) having a width of approximately 381 mm (15 inches), the defect rate as measured by gel formation in the resulting stretch film was 28,301 gel formations of various sizes identified within the specimen, or 3.22654 total instances of gel formation per square foot. In contrast, in a competing run of the same dimensions in which only virgin film was processed, the defect rate as measured by gel formation in the resulting stretch film was 13,865 gel formations of various sizes identified within the specimen, or 1.581014 total instances of gel formation per square foot.

This analysis demonstrates that by using only virgin film in the process run, and by eliminating the addition of any reprocessed film, instances of both gel formations of various sizes and total gel formations within the specimen on a per square foot basis are more than halved. Since the gel formation can be directly responsible for film failure under stress loads, the resulting film produced using only virgin materials is demonstrably superior.

## Claims

1. A method for reducing gel formations when producing a cast stretch film, said method comprising:
disposing one or more extruders (210) in fluid communication with a stock of virgin resin (200);
heating said virgin resin (200) to a molten state;
delivering said molten virgin resin to a die (230);
extruding said molten virgin resin (200) through said die (230) onto a casting roll (250), thereby creating a cast stretch film;
moving the film from the casting roll (250) onto a slitting assembly; and
using said slitting assembly
- to form one or more interior slits, thereby creating waste film that is not recycled back into the production process, and/or
- to form one or more exterior slits, thereby creating waste film that is not recycled back into the production process, wherein gel formations of various sizes and total gel formations on a per square foot basis are more than halved by using only virgin film in the process.

2. A method for reducing gel formations when producing a cast stretch film, said method comprising:
disposing one or more extruders (210) in fluid communication with a stock of virgin resin (200);
heating said virgin resin (200) to a molten state;
delivering said molten virgin resin (200) to a die (230);
extruding said molten virgin resin (200) through said die (230) onto a casting roll (250), thereby creating a cast stretch film;
moving the film from said casting roll (250) to a secondary chill roll (260);
moving the film from the secondary chill (260) roll onto a slitting assembly;
using said slitting assembly
- to form one or more interior slits, thereby creating waste film that is not recycled back into the production process, and/or
- to form one or more exterior slits, thereby creating waste film that is not recycled back into the production process, wherein gel formations of various sizes and total gel formations on a per square foot basis are more than halved by using only virgin film in the process.

3. The method of claim 1 or 2, further comprising delivering said molten virgin resin (200) to a die via one or more transfer pipes (220).

4. The method claim 1 or 2, further comprising moving said resin from the die onto a matte casting roll (250).

5. The method of claim 4, further comprising moving said resin from the die onto a matte casting roll (250), wherein said matte casting roll (250) is an approximately 762-mm matte casting roll (250).

6. The method of claim 1 or 2, further comprising moving said resin from the die onto a casting roll (250) having a set temperature.

7. The method of claim 6, wherein said casting roll (250) has a set temperature between about 23,9° C and about 37, 8° C.

8. The method of claim 7, wherein said casting roll (250) has a set temperature of about 32,2° C.

9. The method of claim 2, wherein said secondary chill roll (260) is an approximately 508-mm chill roll (260).

10. The method of claim 2, wherein said secondary chill roll (260) has a set temperature.

11. The method of claim of claim 10, wherein said secondary chill roll (260) has a set temperature between about 18,3° C and about 32,2° C.

12. The method of claim 11, wherein said secondary chill roll (260) has a set temperature of about 29,4° C.

13. The method of claim 1 or 2, further comprising omitting the introduction of any waste material into the virgin resin (200) prior to the melting and extruding processes.

## Patentansprüche

1. Verfahren zum Verringern von Gelbildungen bei der Herstellung einer gegossenen Dehnfolie, wobei das Verfahren umfasst:
Anordnen von einem oder mehreren Extruder (210) in fluidischer Kommunikation mit einem Vorrat von Frischharz (200);
Erwärmen des Frischharzes (200) in einen geschmolzenen Zustand;
Zuführen des geschmolzenen Frischharzes an eine Matrize (230);
Extrudieren des geschmolzenen Frischharzes (200) durch die Matrize (230) auf eine Gießwalze (250), wodurch eine gegossene Dehnfolie erzeugt wird;
Bewegen der Folie von der Gießwalze (250) auf eine Schneidanordnung; und
Verwenden der Schneidanordnung
- um einen oder mehrere Innenschlitze zu bilden, wodurch Ausschussfolie erzeugt wird, die nicht in den Herstellungsprozess rezykliert wird, und/oder
- um einen oder mehrere Außenschlitze zu bilden, wodurch Ausschussfolie erzeugt wird, die nicht in den Herstellungsprozess rezykliert wird, wobei Gelbildungen verschiedener Größen und insgesamte Gelbildungen auf Quadratfußbasis mehr als halbiert werden, indem in dem Prozess nur Frischfolie verwendet wird.

2. Verfahren zum Verringern von Gelbildungen bei der Herstellung einer gegossenen Dehnfolie, wobei das Verfahren umfasst:
Anordnen von einem oder mehr Extrudern (210) in fluidischer Kommunikation mit einem Vorrat an Frischharz (200);
Erwärmen des Frischharzes (200) in einen geschmolzenen Zustand;
Zuführen des geschmolzenen Frischharzes (200) an eine Matrize (230);
Extrudieren des geschmolzenen Frischharzes (200) durch die Matrize (230) auf eine Gießwalze (250), wodurch eine gegossene Dehnfolie erzeugt wird;
Bewegen der Folie von der Gießwalze (250) auf eine sekundäre Kühlwalze (260);
Bewegen der Folie von der sekundären Kühlwalze (260) auf eine Schneidanordnung;
Verwenden der Schneidanordnung
- um einen oder mehrere Innenschlitze zu bilden, wodurch Ausschussfolie erzeugt wird, die nicht in den Herstellungsprozess rezykliert wird, und/oder
- um einen oder mehrere Außenschlitze zu bilden, wodurch Ausschussfolie erzeugt wird, die nicht in den Herstellungsprozess rezykliert wird, wobei Gelbildungen verschiedener Größen und insgesamte Gelbildungen auf Quadratfußbasis mehr als halbiert werden, indem in dem Prozess nur Frischfolie verwendet wird.

3. Verfahren nach Anspruch 1 oder 2, ferner umfassend das Zuführen geschmolzenen Frischharzes (200) an eine Matrize über ein oder mehr Transferrohre (220).

4. Verfahren nach Anspruch 1 oder 2, ferner umfassend das Bewegen des Harzes von der Matrize auf eine matte Gießwalze (250).

5. Verfahren nach Anspruch 4, ferner umfassend das Bewegen des Harzes von der Matrize auf eine matte Gießwalze (250), wobei die matte Gießwalze (250) eine Gießwalze (250) mit etwa 762 mm ist.

6. Verfahren nach Anspruch 1 oder 2, ferner umfassend das Bewegen des Harzes von der Matrize auf eine Gießwalze (250) mit einer Solltemperatur.

7. Verfahren nach Anspruch 6, wobei die Gießwalze (250) eine Solltemperatur zwischen etwa 23,9 °C und etwa 37,8 °C hat.

8. Verfahren nach Anspruch 7, wobei die Gießwalze (250) eine Solltemperatur von etwa 32,2 °C hat.

9. Verfahren nach Anspruch 2, wobei die sekundäre Kühlwalze (260) eine Kühlwalze (260) mit etwa 508 mm ist.

10. Verfahren nach Anspruch 2, wobei die sekundäre Kühlwalze (260) eine Solltemperatur hat.

11. Verfahren nach Anspruch 10, wobei die sekundäre Kühlwalze (260) eine Solltemperatur zwischen etwa 18,3 ° C und etwa 32,2 °C hat.

12. Verfahren nach Anspruch 11, wobei die sekundäre Kühlwalze (260) eine Solltemperatur von etwa 29,4 °C hat.

13. Verfahren nach Anspruch 1 oder 2, ferner umfassend das Entfallen der Einleitung eines beliebigen Materialverschnitts in das Frischharz (200) vor dem Schmelz- und Extrusionsprozess.

## Revendications

1. Procédé de réduction de gélification lors de la production d'un film étirable coulé, ledit procédé comprenant :
la disposition d'une ou de plusieurs extrudeuses (210) en communication fluidique avec une réserve de résine vierge (200) ;
le chauffage de ladite résine vierge (200) à l'état fondu ;
la distribution de ladite résine vierge fondue à une matrice (230) ;
l'extrusion de ladite résine vierge (200) fondue à travers ladite matrice (230) sur un rouleau de coulée (250), créant ainsi un film étirable coulé ;
le déplacement du film depuis le rouleau de coulée (250) sur un ensemble de coupe ; et
l'utilisation dudit ensemble de coupe
- pour former une ou plusieurs fentes intérieures en créant ainsi une chute de film qui n'est pas recyclée pour une réutilisation dans le processus de production, et/ou
- pour former une ou plusieurs fentes extérieures en créant ainsi une chute de film qui n'est pas recyclée pour une réutilisation dans le processus de production, dans lequel la gélification de diverses tailles et une gélification totale sur une base au mètre carré sont divisées par plus de deux en utilisant seulement un film vierge lors du processus.

2. Procédé de réduction de gélification lors de la production d'un film étirable moulé, ledit procédé comprenant :
la disposition d'une ou de plusieurs extrudeuses (210) en communication fluidique avec une réserve de résine vierge (200) ;
le chauffage de ladite résine vierge (200) à l'état fondu ;
la distribution de ladite résine vierge fondue (200) dans une matrice (230) ;
l'extrusion de ladite résine vierge fondue (200) à travers ladite matrice (230) sur un rouleau de coulée (250) en créant ainsi un film étirable coulé ;
le déplacement du film depuis ledit rouleau de coulée (250) vers un deuxième rouleau refroidisseur (260) ;
le déplacement du film depuis le deuxième rouleau refroidisseur (260) sur un ensemble de coupe ;
l'utilisation dudit ensemble de coupe
- pour former une ou plusieurs fentes intérieures, créant ainsi une chute de film qui n'est pas recyclée pour une réutilisation dans le processus de production, et/ou
- pour former une ou plusieurs fentes extérieures, créant ainsi une chute de film qui n'est pas recyclée pour une réutilisation dans le processus de production, dans lequel la gélification de diverses tailles et la gélification totale sur une base au mètre carré sont divisées par plus de deux en utilisant seulement un film vierge lors du processus.

3. Procédé selon la revendication 1 ou 2, comprenant en outre la distribution de ladite résine vierge (200) à une matrice par l'intermédiaire d'un ou de plusieurs tubes de transfert (220).

4. Procédé selon la revendication 1 ou 2, comprenant en outre le déplacement de ladite résine depuis la matrice sur un rouleau de coulée de matte (250).

5. Procédé selon la revendication 4, comprenant en outre le déplacement de ladite résine depuis la matrice sur un rouleau de coulée de matte (250), dans lequel ledit rouleau de coulée de matte (250) est un rouleau de coulée de matte (250) d'approximativement 762 mm.

6. Procédé selon la revendication 1 ou 2, comprenant en outre le déplacement de ladite résine depuis la matrice sur un rouleau de coulée (250) présentant une température de consigne.

7. Procédé selon la revendication 6, dans lequel ledit rouleau de coulée (250) présente une température de consigne entre environ 23,9 °C et environ 37,8 °C.

8. Procédé selon la revendication 7, dans lequel ledit rouleau de coulée (250) présente une température de consigne d'environ 32,2 °C.

9. Procédé selon la revendication 2, dans lequel ledit deuxième rouleau refroidisseur (260) est un rouleau refroidisseur (260) d'approximativement 508 mm.

10. Procédé selon la revendication 2, dans lequel ledit deuxième rouleau refroidisseur (260) présente une température de consigne.

11. Procédé selon la revendication 10, dans lequel ledit deuxième rouleau refroidisseur (260) présente une température de consigne entre environ 18,3 °C et environ 32,2 °C.

12. Procédé selon la revendication 11, dans lequel ledit deuxième rouleau refroidisseur (260) présente une température de consigne d'environ 29,4 °C.

13. Procédé selon la revendication 1 ou 2, comprenant en outre l'oubli d'introduire toute chute de matériau dans la résine vierge (200) avant les processus de fusion et d'extrusion.
